# EUROPÄISCHE PATENTSCHRIFT

(11) **EP 0 952 692 B1**
(45) Veröffentlichungstag und Bekanntmachung des Hinweises auf die Patenterteilung: **03.10.2007**
(21) Anmeldenummer: 99890084.9
(22) Anmeldetag: 10.03.1999
(51) Int. Cl.: H04J 3/06, H04B 7/26

(54) **Verfahren zur Steuerung eines digitalen Systems**
Method for controlling a digital system
Méthode de commande d'un système digital

(30) Priorität: 20.04.1998 AT 66598
(43) Veröffentlichungstag der Anmeldung: 27.10.1999
(73) Patentinhaber: Siemens Home and Office Communication Devices GmbH & Co. KG, 81541 München (DE)
(72) Erfinder: Höllrigl, Franz, 3931 Schweiggers (AT)
(74) Vertreter: Berg, Peter

(56) Entgegenhaltungen:
- EP-A- 0 641 098
- WO-A-95/05720
- WO-A-96/38990
- DE-A- 4 332 999

## Beschreibung

Die Erfindung bezieht sich auf ein Verfahren zur Steuerung eines digitalen Systems, welches ein erstes Übertragungs/Vermittlungssystem aufweist sowie eine Schnittstelle zu einem zweiten digitalen Übertragungs/Vermittlungssystem und zwischen den Systemen in beiden Richtungen digitale, in Rahmen zusammengefaßte Information ausgetauscht wird.

Die Erfindung bezieht sich insbesondere auch auf ein Verfahren zur Steuerung der Basisstation eines Funktelefonsystems, wie eines Schnurlos- oder Mobilfunksystems, insbesondere eines GSM/CTS-Systems mit einer Schnittstelle zu einem digitalen Festnetz, insbesondere ISDN-Netz.

Ebenso bezieht sich die Erfindung auf eine Basisstation eines Funktelefonsystems mit einer Schnittstelle zu einem digitalen Festnetz, insbesondere ISDN-Netz, mit einer Steuereinheit , einem Hochfrequenzteil und einem lokalen Oszillator für das Funktelefonsystem, bei welcher die Steuereinheit einen Rahmenzähler besitzt, dem ein rascher, den Rahmen in kurze Zeitabschnitte unterteilender Zähltakt zugeführt ist.

Die bekannten Mobilfunksysteme, wie z.B. GSM (Global System Mobile), arbeiten nach FDMA/TDMA-Verfahren, d.h. nach Frequenz-und Zeitmultiplexverfahren, wobei im Sinne aller Zeitmultiplexverfahren mit digitaler Datenübermittlung die einzelnen Datenbits in Rahmen zusammengefaßt sind. Die Aussendung der Daten erfolgt in Bursts, wobei internationale Standards genaue Vorgaben hinsichtlich der Daten- und Burstformate ebenso liefern, wie hinsichtlich der Frequenzgenauigkeit. Letztere liegt beispielsweise im GSM-System bei 0,05 ppm, wobei die Basisstationen einen genauen Takt erzeugen, der meist noch von einem hochgenauen, etwa einem von einem Cäsium-Normale abgeleiteten Takt in einer PLL synchronisiert ist. Der in einem lokalen Oszillator der Basisstation erzeugte Takt synchronisiert nicht nur den Bittakt und den Rahmentakt sondern ist auch die Referenz für die Sendefrequenzen. Die Mobilteile sind hinsichtlich des Taktes "Slaves", d.h. sie synchronisieren sich bei bestehender Verbindung auf die Basisstation auf.

Schnurlostelefone bzw. -systeme unterscheiden sich von Mobilfunksystemen vor allem durch die Zellengröße, die beispielsweise je Basisstation im Bereich bis ca. 300 m liegt. Auf dem Gebiet der Schnurlostelefone existieren ebenfalls weiträumig akzeptierte Standards, von welchen das DECT-Sytem (Digital Enhanced Cordless Telecommunications) verbreitet ist. Die Basisstation eines Schnurlostelefonsystems steht im allgemeinen über eine Schnittstelle mit einem Telefon-Festnetz in Verbindung, bei herkömmlichen analogen Festnetzen über einen entsprechenden Zweiadern-Anschluß, bei einem ISDN-Netz (Integrated Services Digital Network) über die genormte Sₒ-Schnittstelle. Im Rahmen der Erfindung sollen digitale Festnetze, wie das ISDN-Netz betrachtet werden, bei welchen die Daten gleichfalls in digitaler Form, die Bits zu Rahmen zusammengefaßt, übertragen werden.

Digitale Festnetze unterscheiden sich allerdings in verschiedener Hinsicht bezüglich der Art der Datenübertragung von Mobilfunk- oder Schnurlostelefonsystemen, wobei für die vorliegende Erfindung von Bedeutung ist, daß die Daten nicht nur in Rahmen unterschiedlicher Länge und mit einem anderen Takt übertragen werden, sondern daß auch unterschiedliche Anforderungen an die Taktgenauigkeit gestellt werden. So ist die Taktgenauigkeit in einem ISDN-System mit lediglich 50 oder 100 ppm festgelegt, wogegen, wie vorhin erwähnt, bei einem GSM-System 0,05 ppm gefordert werden.

In letzter Zeit werden verschiedene Bemühungen dahingehend unternommen, die weitverbreiteten "Handys", d.h die Mobilteile eines Funktelefonsystems, auch als Schnurlostelefone verwenden zu können. Beispielsweise sind die sogenannten Dual-Mode-Handys bekannt geworden, die weitgehend getrennte HF-Teile für einerseits ein Schnurlossystem und für andererseits ein Mobilfunksystem besitzen, z.B. DECT- und GSM-HF-Teile. Ein solches Dual-Mode-Handy kann, ohne daß es irgendeines händischen Umschaltens bedarf, außerhalb der Schnurloszelle als Funktelefon, innerhalb dieser Zelle jedoch als Schnurlostelefon verwendet werden, wobei Gespräche dann nach dem meist wesentlich günstigeren Tarif des Festnetzes verrechnet werden.

Neuere Bestrebungen gehen aber dahin, Handys zu schaffen, die innerhalb der Schnurlos-Zelle praktisch den gleichen Standard verwenden wie in dem Mobilfunknetz. So ist eine Entwicklung unter der Abkürzung CTS (Cordless Telephony System) bekannt geworden, bei welcher die aufwendige Zweiteilung z.B. des HF-Systems in dem Handy nicht mehr erforderlich ist. Eine Darstellung des CTS-Systems ist beispielsweise in den vorläufigen ETSI-Empfehlungen: GSM 3.56 (CTS Architecture Description) und GSM 2.56 (CTS Service Description), Nürnberg, 10/11 Dez. 1997, zu finden. Die nach wie vor jedoch unterschiedlichen Daten- und Taktformate zwischen z.B. DECT einerseits und GSM andererseits bedingen in der an das Festnetz angeschlossenen Basisstation den Einsatz eines Schnittstellenwandlers. Man kann aufwendige Algorithmen zur Taktwandlung verwenden, um einen Über- oder Unterlauf von Daten aufgrund der unterschiedlichen Taktraten zu vermeiden. Bei DECT-Basisstationen tritt dieses Problem natürlich auch auf und hier werden die Hochfrequenz und der Bittakt synchronisiert, jedoch wird bei Bedarf die Rahmendauer geändert, sodaß die langfristige Bitrate an das ISDN-System angeglichen wird. Die Ausführung ist größtenteils hardwaremäßig bereits in den DECT-Basisstationen implementiert.

Ausbildungen gemäß dem oben erwähnten Stand der Technik sind z. B. der EP 0 690 641 A2 zu entnehmen, in welcher ein Mikrofunksystem auf GSM-Grundlage beschrieben wird, ohne daß allerdings auf das Problem der Bitratenadaption eingegangen wird.

Weiters ist in der EP 0 624 995 A1 eine DECT-Nebenstellenanalage beschrieben, wobei zu bemerken ist, daß im DECT-System das Problem der Bitratenadaption rein hardwaremäßig gelöst wird.

In der EP 0 727 882 A2 wird für ein synchrones digitales Übertragungssystem ein Verfahren beschrieben, um Bytes zu dem Bitstrom hinzuzufügen bzw. um Bytes wegzulassen, was durch Zählen der in einem Netzknoten einlangenden Rahmenbytes bzw. durch Zählen der ausgesendeten Rahmenbytes ermöglicht wird.

DE4332999 offenbart die Merkmale des Oberbegriffs der unabhängigen Ansprüche. Die Synchronisierung der beiden Systeme erfolgt durch die Übermittlung eines Referenztaktes, bezeichnet mit "kst", an die Basisstation und eine Regelung der Phasenlage des Taktes der Basisstation mittels eines Vergleichs von Signalflanken und einer Phasenregelschleife.

Die Erfindung hat sich die Aufgabe gestellt, das Problem der unterschiedlichen Taktfrequenzen auf möglichst einfache Weise zu lösen, d.h. mit geringem Aufwand sowohl an Hard- als auch an Software, wobei auch die Verwendung bereits vorhandener Chipsätze mit geringstmöglichen Modifikationen erlaubt sein sollte. Im allgemeiner Form soll das Problem unterschiedlicher Taktfrequenzen mit auch unterschiedlicher Genauigkeit bei einem System, bestehend aus zwei Übertragungs/Vermittlungssystemen wie eingangs genannt gelöst werden.

Diese Aufgabe wird mit einem Verfahren der eingangs genannten Art gelöst, bei welchem erfindungsgemäß die Zeitdauer einer Mehrzahl von Rahmen des zweiten digitalen Festnetzsystems unter Verwendung eines mit dem Funktelefonsystem synchronen Taktes mehrmals gemessen wird und bei Unter- oder Überschreitung dieser Zeitdauer von einem Sollwert die folgenden Rahmen des Funktelefonsystems entsprechend der festgestellten Abweichung verlängert oder verkürzt werden.

Für die Basisstation eines Funktelefonsystem im besonderen wird die Aufgabe dadurch gelöst, daß die Zeitdauer einer Mehrzahl von Rahmen des digitalen Festnetzsystems unter Verwendung eines Funktelefon-synchronen Taktes gemessen wird und bei Unter- oder Überschreitung dieser Zeitdauer von einem Sollwert die folgenden Rahmen des Funktelefonsystems entsprechend der festgestellten Abweichung verlängert oder verkürzt werden.

Dabei ist es besonders praxisgerecht, wenn die Zeitdauer der Mehrzahl von Rahmen des Funktelefonsystems dem zumindest kleinsten gemeinsamen Vielfachen der Rahmendauer des Funktelefonsystems und der Rahmendauer des digitalen ISDN-Festnetzes entspricht.

Durch die erfindungsgemäße Messung und Korrektur können die unterschiedlichen Bitraten der beiden Systeme auf einfachem Wege ausgeglichen werden und Modifikationen an handelsübliche (GSM)- Chipsätzen sowie an Software für Basisstationen und Handys beschränken sich auf ein Minimum.

Im Gegensatz zu den oben erwähnten Stopfmechanismus nach der EP 0 727 882 A2 geht die Erfindung somit einen anderen Weg, welcher den Vorteil bietet, daß er sehr einfach zu realisieren ist, z. B. durch einen Interrupt zur Auslesung eines Zählerstandes.

Es kann zweckmäßig sein, wenn daß die Zeitdauer von insgesamt k*n Rahmen gemessen und sodann über k gemittelt wird, wobei der Mittelwert zur Verlängerung oder Verkürzung der festgestellten Abweichung herangezogen wird, da sich hierdurch die Anzahl der erforderlichen Korrektureingriffe verringern läßt.

Die gestellte Aufgabe wird auch mit einer Basisstation der zu Beginn genannten Art gelöst, bei welcher erfindungsgemäß ein Teiler für der Takt des digitalen Netzes bzw. einen dazu vielfachen Takt vorgesehen ist, welcher auf einen Ausgangstakt teilt, dessen Periodendauer ein gemeinsames Vielfaches der Rahmendauer im digitalen Festnetz und der Rahmendauer im Funktelefonsystem ist, der Ausgangstakt des Teilers als Steuersignal für das Auslesen des Rahmenzählers herangezogen ist und die Steuereinheit dazu eingerichtet ist, aufgrund der Differenz aufeinanderfolgender Zählerstände die Rahmen im Funktelefonsystem entsprechend zu verlängern oder zu verkürzen.

Die hierdurch erzielbaren Vorteile wurden bereits in Zusammenhang mit dem Verfahren nach der Erfindung genannt, doch ist anzumerken, daß die Mitverwendung des in einer Basisstation bereits vorhandenen Rahmenzählers nur geringfügige Kosten nach sich zieht.

Besonders einfach kann die Erfindung realisiert werden, falls der Ausgangstakt des Teilers zur Durchführung eines Interrupt in der Steuereinheit herangezogen ist.

Die Erfindung samt weiterer Vorteile ist im folgenden anhand eines Ausführungsbeispiels näher erläutert, das in der Zeichnung veranschaulicht ist. In dieser zeigen
- Fig. 1: in schematischer Darstellung eine Basisstation für ein Schnurlostelefonsystem, die über eine Schnittstelle an ein Festnetz angeschlossen ist,
- Fig. 2: die Zuordnung von CTS-Rahmen zu ISDN-Rahmen bei synchronisierten Takten,
- Fig. 3: die Situation ähnlich Fig. 2, jedoch mit einem ISDN-Takt, der schneller ist als der CTS-Takt, und
- Fig. 4: in einer Darstellung wie Fig. 2 und 3 die Anpassung der Takte, hier durch Korrektur im ersten CTS-Rahmen.

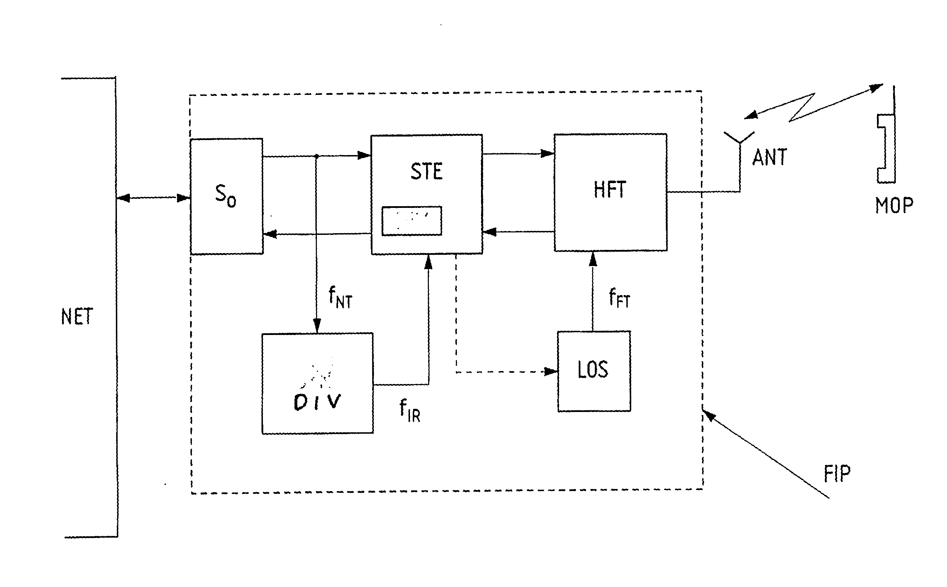

Gemäß Fig. 1 weist eine Basistation, beispielsweise eines CTS/GSM-Schnurlostelefonsystems eine Schnittstelle S₀ zu einem digitalen Festnetz, z.B. einem ISDN-Netz auf, auch Amtskopf genannt. Ein Hochfrequenzteil HFT ist an eine Antenne ANT angeschlossen, sodaß sich eine Funkschnittstelle zu einem Mobilteil MPO ergibt.

Ein wesentlicher Teil der Basisstation ist von einer Steuereinheit STE gebildet, welche prinzipiell die Datenverarbeitung durchführt, und auch für die Basisbandverarbeitung sorgt. Insbesondere werden hier die von der ISDN-Seite einerseits und von der CTS(GSM)-Seite andererseits in unterschiedlichen Rahmenformaten einlangenden Daten in der erforderlichen Weise angepaßt.

Der Hochfrequenzteil HFT erhält seinen Muttertakt f_{FT} von einem lokalen Oszillator LOS, im allgemeinen einem Quarzoszillator, dem seitens der Steuereinheit STE auch ein AFC-Signal zugeführt sein kann, was hier nur strichliert angedeutet ist, da für die Erfindung nicht von Bedeutung. Der lokale und genaue Oszillator LOS ist für die zur Anwendung gelangenden Sende- und Empfangsfrequenzen bestimmend, d.h. die Trägerfrequenzen werden durch Multiplikation oder Division aus der Frequenz des Oszillators erzeugt, die beispielsweise 13 MHz beträgt.

Aus dem Ausgang f_{FT} des Oszillators LOS wird aber auch der Arbeitstakt für die Steuereinheit STE auf der CTS/GSM-Seite durch Division oder Multiplikation abgeleitet, sodaß auch die Bit- und Rahmensynchronisation auf den Muttertakt f_{FT} synchronisiert ist.

Die Basisstation FIP enthält weiters einen Teiler DIV, dessen Eingang der ISDN-Rahmentakt f_{NT} mit einer Periodendauer von 125µs oder ein anderer, daraus abgeleiteter Takt zugeführt ist. Im vorliegenden Beispiel teilt der Teiler DIV den 125µs-Takt f_{NT} durch 480, sodaß der Ausgangstakt f_{IR} des Teilers ein 60ms-Takt ist. Dieser Takt f_{IR} wird der Steuereinheit STE zugeführt und als Steuersignal verwendet, um den Zählerstand eines Rahmenzählers FCC auszulesen. Im einfachsten Fall kann man durch das Steuersignal einen Interrupt des Controllers oder des Signalprozessors hervorrufen, um den Zählerstand auszulesen.

Der genannte Rahmenzähler FCC dient zur Messung der Unterteilung der CTS/GSM-Rahmen in z.B. 10.000 Untereinheiten (zu je ein Achtel Bit). Die Dauer eines CTS/GSM-Rahmens beträgt ca. 4,615ms, die Dauer eines ISDN-Rahmens 125µs, sodaß das kleinste gemeinsame Vielfache beider Rahmendauern 125µs·480 = 60ms ≈ 4,615ms·13 beträgt.

Die Erfindung beruht nun darauf, über diesen Zeitraum, somit über n = 13 Rahmen des CTS/GSM-Systems zu messen und hierzu den Rahmenzähler FCC zu verwenden. Natürlich kann auch über k*n Rahmen, mit k = 2, 3, ... gemessen werden.

Falls die beiden Systeme, nämlich das ISDN-Netz NET und das CTS/GSM-System synchron laufen, so ist zu jedem Zeitpunkt der Interrupt-Flanke der Zählerstand des Rahmenzählers, der z.B. immer bis 10.000 zählt und dann wieder von vorne beginnt, gleich. Laufen die Systeme jedoch nicht synchron, so wandert der Zählerstand des Rahmenzählers FCC, und die Software paßt die CTS/GSM-Rahmen vor einer Verbindung mit Mobilteilen so rasch wie möglich an den ISDN-Takt an. Danach wird aufgrund der gemittelten Zählerwerte in der 60ms-Flanke der Korrekturwert pro CTS/GSM-Rahmen für die nächste Zeit berechnet und pro Rahmen eine Korrektur durchgeführt, sofern dies erforderlich ist.

Das Wesen der Erfindung geht auch anschaulich aus den Fig. 2 bis 4 hervor, auf die nun Bezug genommen wird. Betrachtet wird dabei im wesentlichen ein Zeitraum von 60ms, entsprechend 13 CTS-Rahmen bzw. 480 ISDN-Rahmen. In allen Figuren ist jeweils in der ersten Reihe der Ablauf der CTS-Rahmen, in der zweiten der Rahmenzähler bzw. sein Takt, in der dritten Reihe der Ablauf der ISDN-Rahmen und in der vierten Reihe das Interrupt-Signal f_{IR} dargestellt.

Aus Fig. 2 erkennt man die Situation, falls das ISDN-System und das CTS-System "gleich schnell", d.h. synchron laufen. Der Rahmenzähler FCC zählt mit einem Takt von 1/8-CTS-Bit, das sind ca. 462ns, wobei immer von 1 bis 10.000 gezählt wird. Da Synchronizität vorliegt, ist bei jedem Auslesen des Zählers, hier jedem Interrupt, der gleiche Zählerstand ("1") gegeben, und es ist nichts zu veranlassen. Es kommt selbstverständlich nur auf die Differenz der Zählerstände an, die hier Null ist, was ebenso bei einem ersten Zählerstand von "333" und einem gleichen zweiten Zählerstand der Fall wäre.

Nach Fig. 3 liegt der Fall vor, daß das ISDN-System "schneller" ist als das CTS-System. Zu Beginn des ersten CTS-Rahmens wird ein Zählerstand "1" ausgelesen, am Ende des 13-ten CTS-Rahmens, bei dem nächsten 60ms-Interrupt, ein Zählerstand "9998". Daher müssen die CTS-Rahmen um 3*1/8 Bit je 60ms beschleunigt werden, d.h. drei CTS-Rahmen sind je 1/8 Bit innerhalb 60ms zu verkürzen.

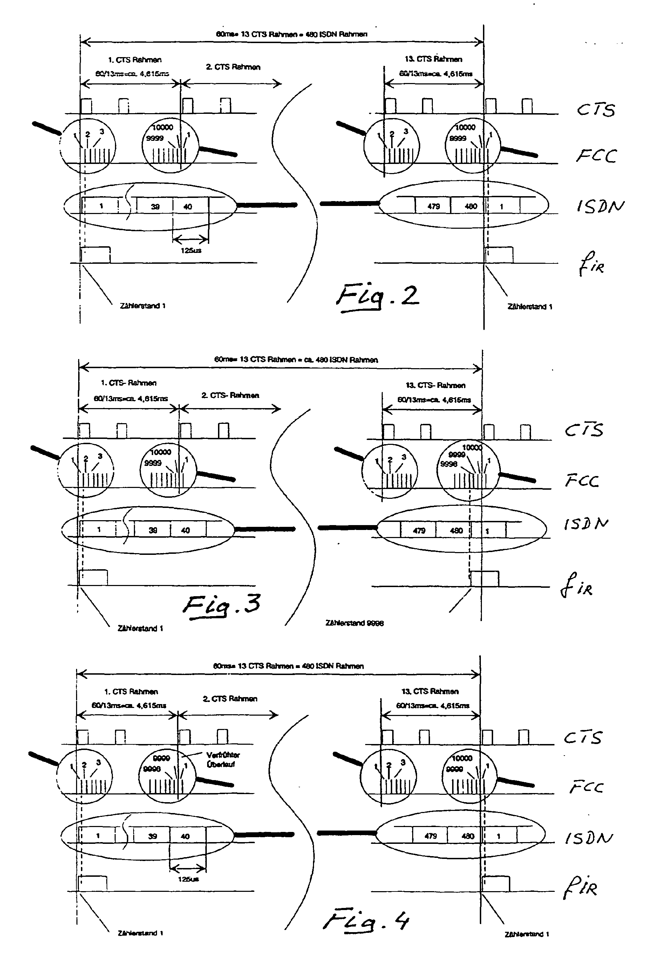

Diese Korrektur kann von der Software durchgeführt werden, die anhand der Differenz der Zählerstände berechnet, ob ein nächster Rahmen verlängert oder verkürzt werden soll, und in Fig. 4 ist die Anpassung des CTS-Systems an das ISDN-System dargestellt, hier beispielsweise am ersten CTS-Rahmen durch einen verfrühten Überlauf des Zählers wie dargestellt. Dies muß, ausgehend von der Situation in Fig. 3, noch bei zwei weiteren der insgesamt 13 CTS-Rahmen erfolgen. Am Ende der 60ms-Periode ergibt sich dann wieder der gleiche Zählerstand, nämlich "1", wie zu Beginn; die Korrektur ist durchgeführt.

Bei dem beschriebenen Verfahren wird über die beiden Takten gemeinsame Zeitperiode, hier 60ms, gemittelt. Es ist aber auch möglich, z.B. alle 60ms zu messen, insgesamt k Meßwerte anzusammeln und sodann über k zu mitteln, z.B. über 480ms, entsprechend k = 8. Ebenso kann man über eine längere Zeitdauer als das kleinste gemeinsame Vielfache der Rahmendauern messen, z.B. über 240ms statt über 60ms. Auch ist die Bildung gleitender Mittelwerte möglich. Die Wahl der Meßdauer bzw. die Art der Mittelwertbildung hängt von der Größe der zu erwartenden Taktabweichungen einerseits und von den Anforderungen an die Signalqualität andererseits ab.

## Patentansprüche

1. Verfahren zur Steuerung der Basisstation (FIP) eines Funktelefonsystems, wie eines Schnurlos- oder Mobilfunksystems, insbesondere eines GSM/CTS-Systems, mit einer Schnittstelle (S₀) zu einem digitalen ISDN-Festnetz (NET), **dadurch gekennzeichnet, dass** die Zeitdauer einer Mehrzahl (n) von Rahmen des digitalen ISDN-Festnetzsystems unter Verwendung eines Funkktelefon-synchronen Taktes gemessen wird und bei Unter- oder Überschreitung dieser Zeitdauer von einem Sollwert die folgenden Rahmen des Funktelefonsystems entsprechend der festgestellten Abweichung verlängert oder verkürzt werden, wobei die Zeitdauer der Mehrzahl (n) von Rahmen des digitalen ISDN-Festnetzsystems dem zumindest kleinsten gemeinsamen Vielfachen der Rahmendauer des Funktelefonsystems und der Rahmendauer des digitalen ISDN-Festnetzsystems entspricht.

2. Verfahren nach Anspruch 1, **dadurch gekennzeichnet, daß** die Zeitdauer von insgesamt k*n Rahmen gemessen und sodann über k gemittelt wird, wobei der Mittelwert zur Verlängerung oder Verkürzung der festgestellten Abweichung herangezogen wird.

3. Basisstation (FIP) eines Funktelefonsystems mit einer Schnittstelle (S₀) zu einem digitalen ISDN-Festnetz (NET), mit einer Steuereinheit (STE), einem Hochfrequenzteil (HFT) und einem lokalen Oszillator (LOS) für das Funktelefonsystem, bei welcher die Steuereinheit einen Rahmenzähler (FCC) besitzt, dem ein rascher, den Rahmen in kurze Zeitabschnitte, unterteilender Zähltakt zugeführt ist,
**dadurch gekennzeichnet, dass**
ein Teiler (DIV) für den Takt (f_{NT}) des digitalen ISDN-Netzes (NET) oder für einen dazu vielfachen Takt vorgesehen ist, welcher auf einen Ausgangstakt (f_{IR}) teilt, dessen Periodendauer ein gemeinsames Vielfaches der Rahmendauer im digitalen ISDN-Festnetz und der Rahmendauer im Funktelefonsystem ist,
der Ausgangstakt (f_{IR}) des Teilers (DIV) als Steuersignal für das Auslesen des Rahmenzählers (FCC) herangezogen ist und die Steuereinheit (STE) dazu eingerichtet ist, auf grund der Differenz aufeinander folgender Zählerstände des Rahmenzählers die Rahmen des Funktelefonsystems entsprechend zu verlängern oder zu verkürzen.

4. Basisstation (FIP) nach Anspruch 3, **dadurch gekennzeichnet, dass** der Ausgangstakt (f_{IR}) des Teilers (DIV) zur Durchführung eines Interrupt in der Steuereinheit (STE) herangezogen ist.

## Claims

1. Method for control of the base station (FIP) of a radio telephone system, such as a cordless or mobile telephone system, especially of a GSM/CTS system with an interface (S₀) to a digital ISDN fixed network (NET), **characterised in that** the duration of a plurality (n) of frames of the digital ISDN fixed network system is measured using a radio telephone synchronous clock and, if this duration exceeds or falls below a required value, the following frames of the radio telephone system are lengthened or shortened according to the deviation established, with the duration of the plurality (n) of frames of the radio telephone system corresponding to the at least smallest common multiple of the frame duration of the digital ISDN fixed network system and the frame duration of the radio telephone system.

2. Method in accordance with claim 1, **characterised in that** the period of a total of k*n frames is measured and then averaged over k, with the average value being included for lengthening or shortening the deviation established.

3. Base station (FIP) of a radio telephone system with an interface (S₀) to a digital ISDN fixed network (NET), with a control unit (STE), a high-frequency section(HFT) and a local oscillator (LOS) for the radio telephone system, in which the control unit possesses a frame counter (FCC) to which is fed a fast count clock dividing up the frame into short time sections,
**characterised in that**,
a divider (DIV) for the clock (f_{NT}) of the digital ISDN network (NET) or for a multiple clock for this network is provided, which divides up into an output clock (f_{IR}), of which the period duration is a common multiple of the frame duration in the digital ISDN fixed network and is the frame duration in the radio telephone system,
the output clock (f_{IR}) of the divider (DIV) is included as control signal for the reading out of the frame counter (FCC) and the control unit (STE) is set up, on the basis of the difference between consecutive counter states, to lengthen or shorten the frames of the radio telephone system accordingly.

4. Base station (FIP) as claimed in claim 3, **characterised in that** the output clock t (f_{IR}) of the divider (DIV) is employed for executing an interrupt in the control unit (STE).

## Revendications

1. Procédé pour commander la station de base (FIP) d'un système radiotéléphonique, comme un système sans fil ou un système de téléphonie mobile, en particulier d'un système GSM/CTS, avec une interface (S₀) vers un réseau fixe ISDN numérique (NET), **caractérisé en ce que** la durée d'une pluralité (n) de trames du système de réseau fixe ISDN numérique est mesurée avec l'utilisation d'un rythme synchrone par rapport au radiotéléphone, et en cas de sous-dépassement ou de dépassement de cette durée par rapport à une valeur prescrite, les trames suivantes du système radiotéléphonique sont allongées ou raccourcies en fonction de l'écart constaté, la durée de la pluralité (n) de trames du système de réseau fixe ISDN numérique correspondant à l'au moins plus petit commun multiple de la durée de trame du système radiotéléphonique et de la durée de trame du système de réseau fixe ISDN numérique.

2. Procédé selon la revendication 1, **caractérisé en ce que** la durée de au total k*n trames est mesurée et qu'on fait ensuite la moyenne par rapport à k, la valeur moyenne étant utilisée pour le prolongement ou la réduction de l'écart constaté.

3. Station de base (FIP) d'un système radiotéléphonique avec une interface (S₀) vers un réseau fixe ISDN numérique (NET), avec une unité de commande (STE), une partie haute fréquence (HFT) et un oscillateur local (LOS) pour le système radiotéléphonique, sur laquelle l'unité de commande présente un compteur de trames (FCC), auquel est amené un rythme de comptage rapide, subdivisant la trame en périodes courtes,
**caractérisée en ce que**
un diviseur (DIV) est prévu pour le rythme (f_{NT}) du réseau ISDN numérique (NET) ou pour un rythme multiple de celui-ci, lequel diviseur divise vers un rythme de sortie (f_{IR}), dont la durée de période est un commun multiple de la durée de trame dans le réseau fixe ISDN numérique et de la durée de trame dans le système radiotéléphonique,
le rythme de sortie (f_{IR}) du diviseur (DIV) est utilisé comme signal de commande pour la lecture du compteur de trames (FCC) et l'unité de commande (STE) est aménagée pour allonger ou raccourcir en conséquence les trames du système radiotéléphonique sur la base de la différence d'indications de compteur consécutives du compteur de trames.

4. Station de base (FIP) selon la revendication 3, **caractérisée en ce que** le rythme de sortie (f_{IR}) du diviseur (DIV) est utilisé pour la mise en oeuvre d'une interruption dans l'unité de commande (STE).
